# EUROPEAN PATENT SPECIFICATION

(11) **EP 3 979 796 B1**
(45) Date of publication and mention of the grant of the patent: **09.10.2024**
(21) Application number: 20728054.6
(22) Date of filing: 28.05.2020
(51) Int. Cl.: A01M 7/00

(54) **SPRAY APPLICATION DEVICE**
SPRÜHAPPLIKATOR
DISPOSITIF D'APPLICATION DE PULVÉRISATION

(30) Priority: 04.06.2019 EP 19178126
(43) Date of publication of application: 13.04.2022
(73) Proprietor: Bayer Aktiengesellschaft, 51373 Leverkusen (DE)
(72) Inventor: CHAPPLE, Charles, Andrew, 40764 Langenfeld (DE); MAYER, Walter, 42115 Wuppertal (DE)
(74) Representative: BIP Patents
(86) International application number: PCT/EP2020/064825
(87) International publication number: WO 2020/245025

(56) References cited:
- EP-A1- 1 961 299
- WO-A1-2017/223252
- WO-A2-2005/048704
- US-A1- 2016 015 020
- US-A1- 2017 348 718

## Description

### FIELD OF THE INVENTION

The present invention relates to spray application device(s) for application of an active ingredient(s) to agricultural crops, to vehicle(s) comprising spray application device(s), to method(s) of spray application by the spray application device(s), to computer program element(s) for controlling the spray application device(s), and for computer program element(s) for controlling vehicle(s) comprising spray application device(s).

### BACKGROUND OF THE INVENTION

The general background of this invention is the application of active ingredients in liquid form to foliage, being applied with back-pack sprayers or vehicles such as tractors, drones and helicopters. Active ingredients, such as herbicides, insecticides, fungicides, pesticides and nutritional supplements, are required to be applied in agricultural environments. Controlling weeds, insects and diseases in crops is an important requirement for reducing losses in agriculture. This is commonly achieved by foliar spray of crops by spray application from back-pack sprayers, tractors, drones and helicopters. A disadvantage of all these application techniques is e.g., that typically, the whole field is sprayed and that the application techniques are not on-line adjustable.
WO2017/223252 Aldiscloses a system for controlling nozzle flow rate including a master node having an expected overall flow rate module configured to generate an expected overall flow rate of an agricultural product based on one ore more sprayer characteristics.
US2017/348718 A1 discloses a system for controlling nozzle flow rate. A plurality of smart nozzles are in communication with the master node, each of the smart nozzles includes an electronic control unit in communication with one or more control valves and one or more nozzle assemblies. Each of the smart nozzles includes a target smart nozzle flow rate module configured to generate a target smart nozzle flow rate of the agricultural product based on the one or more sprayer characteristics.
WO2005/048704 A2 and EP 1 061 299 A1 disclose spray devices for spraying liquids, especially for agricultural purposes.
US2016/015020 discloses a spray system to dispense a product. The spray system can include pulse wide modulation.

In general, there is a need to improve the spraying practice on agricultural fields and to facilitate application in new ways. It is also a demand to provide sustainable solutions and to reduce the cost of such applications.

### SUMMARY OF THE INVENTION

It would be advantageous to have improved means of applying active ingredients in agricultural environments.

The object of the present invention is solved with the subject matter of the independent claims, wherein further embodiments are incorporated in the dependent claims. It should be noted that the following described aspects and examples of the invention apply also for spray application device(s) for application of active ingredient(s) to agricultural crops, for vehicle(s) comprising spray application device(s), for method(s) of spray application by spray application device(s), for computer program element(s) for controlling spray application device(s), and for computer program element(s) for controlling vehicle(s) comprising spray application device(s).

According to a first aspect, there is provided a spray application device, comprising:
- at least one diluent reservoir for holding a diluent;
- at least one formulation reservoir for holding a formulation comprising an active ingredient;
- at least one formulation flow rate control unit;
- a processing unit;
- at least one mixer unit;
- at least one spray unit. The at least one formulation flow rate control unit is configured to regulate the volume flow of the formulation into the at least one mixer unit.

The at least one mixer unit is configured to mix the diluent from the at least one diluent reservoir with the formulation comprising an active ingredient from the at least one formulation reservoir to obtain a mixture. The at least one spray unit is configured to spray the mixture. The at least one spray unit is configured to implement pulse width modulation to spray the mixture. The spray application device is configured to spray a constant concentration of the active ingredient per hectare as a function of variable mixture spray volume comprising a determination by the processing unit of at least one instruction to control the at least one formulation rate control unit and the at least one spray unit to maintain the dose of the active ingredient constant per hectare while changing the application mixture volume per hectare.

In other words, the spray application device can spray a diluted formulation with an active ingredient such as an agrochemical active ingredient to an area to be sprayed, such as a crop field, and maintain the dose of the active ingredient constant while changing the application volume. The design of this spray application device is useful to e.g., observe the effects of the changing volume on plant health such as e.g., to observe phytotoxic effects on plants when the mixing ratio between the diluent and the formulation comprising the active ingredient is not optimal. The spray application device can therefore be e.g., used for research and development trials of active ingredients or for registration trials of active ingredients. However, the spray application device of the invention can also be used for digital and precision farming applications.

A volume change of the diluted formulation to be sprayed on an area while keeping the dose of the active ingredient constant can be achieved in various ways such as e.g. pulse width modulation (PWM) of the at least one spray unit in combination with a change/changes in the flow rate as regulated by the at least one formulation flow rate control unit. Therefore, the flow rate of the formulation into the mixer unit is e.g. electronically matched to the duty cycle of the PWM spray unit to maintain the dose constant (gram active ingredient per hectare) while enabling variation of the volume of the diluted formulation to be sprayed on an area.

In an example, an instruction to control the at least one formulation rate control unit by the processing unit comprises an instruction to change the flow rate of the formulation from the at least one formulation reservoir into the at least one mixer unit.

The change of the flow rate of the formulation into the at least one mixer unit refers to an increase in the flow rate, e.g., by a factor of 2 while maintaining the flow of the diluent from the at least one diluent reservoir into the at least one mixer unit. By doing so, the ratio between the active ingredient and the diluent in the mixture to be sprayed by the at least one spray unit changes e.g. from 2:1 to 1:1. The change of the flow rate of the formulation into the at least one mixer unit can also refer to a decrease in the flow rate. As the time interval for regulating the changes in the flow rate is short e.g. be seconds or milliseconds mixing ratios can be adjusted quickly.

In an example, the implementation of the pulse width modulation comprises an instruction to change the duty cycle of the pulse width modulation.

The change of the duty cycle of the PWM refers to an increase or decrease of the pulse width which leads to increase or decrease in the amount to be sprayed on an area. As the time interval for regulating the changes in the duty cycle of the PWM is short, e.g., seconds or milliseconds, the amount of spraying can be adjusted quickly.

In an example, the spray application device comprises at least one sensor configured to measure the movement speed of the spray application device relative to the ground and wherein the determination by the processing unit is based on the measurement of the movement speed by the at least one sensor.

The measurement of the spraying speed of the device relative to the ground and its consideration in the determination of the at least one instruction by the processing unit to control the at least one formulation rate control unit and/or the at least one spray unit leads to better and more consistent spraying results.

In an example, the processing unit is configured to determine an instruction to decrease the flow rate of the formulation from the at least one formulation reservoir into the at least one mixer unit as a function of an increase of the duty cycle of the pulse width modulation provided that the movement speed of the spray application device relative to the ground is constant and wherein the processing unit is configured to determine an instruction to increase the flow rate of the formulation from the at least one formulation reservoir into the at least one mixer unit as a function of a decrease of the duty cycle of the pulse width modulation provided that the movement speed of the spray application device relative to the ground is constant.

When changing duty cycles of the pulse width modulation, more or less mixture volume can be applied to a field. However, in order to have a constant concentration of active ingredient per hectare on the field this needs to be e.g., compensated by changing the flow rate of the formulation into the at least one mixer unit. In summary, this allows for quick adaptations of the spraying process and makes the spraying overall more flexible.

In an example, the spray application device further comprises an input unit, wherein the input unit is configured to enable a user of the spray application device to provide information relating to a spraying pattern for a predefined area and wherein the determination by the processing unit is based on the information provided by the user.

In cases where a user wants to examine the effects of a changing mixture spray volume on plants while the concentration of the active ingredient per hectare shall be kept constant, it is useful to define a spraying pattern for a certain spraying target area before the spraying takes place. This is in particular useful for research and development trials of active ingredients and their formulations and/or for registration trials of active ingredients and their formulations.

In an example, the spray application device further comprises location determining means, wherein the spray application device is configured to spray a constant concentration of the active ingredient per hectare as a function of variable mixture spray volume comprising a determination by the processing unit of at least one instruction to control the at least one formulation rate control unit and the at least one spray unit, wherein the determination by the processing is based on the location of the spray application device as determined by the location determining means.

According to a second aspect, there is provided a vehicle comprising a spray application device and at least one actuator to move the vehicle relative to the ground.

The spray application device can be used e.g., as a backpack sprayer and/or a knapsack sprayer but can also be part of a manned or unmanned aerial vehicle, such as a plane, helicopter and/or drone; and/or a manned or unmanned ground vehicle such as a robotic device, a boom sprayer on a tractor, etc.

In an example, the vehicle comprising a spray application device is configured to spray a constant concentration of the active ingredient per hectare as a function of variable mixture spray volume comprising a determination by the processing unit of at least one instruction to control the at least one formulation rate control unit, the at least one spray unit and/or the movement speed of the vehicle relative to the ground via the at least one actuator.

In order to achieve the spraying of a constant concentration of the active ingredient per hectare while changing the spraying volume, also the movement speed of the vehicle can be varied. As an example, if the velocity of the vehicle is increased from 5 kph to 20 kph, the volume sprayed on the target area decreases by a factor of 4. Therefore, controlling the movement speed of the vehicle is an additional parameter to be taken into account for a flexible and agile spraying practice. In this connection, also the topography and position of the spray application device within a field to be sprayed can be considered. E.g., if the device sprays near the borders of the field, the velocity of the vehicle may need to be reduced in order to avoid drift whereas the velocity can be higher in the middle of the field where drift might not be as much of an issue.

According to a third aspect, there is provided a method of spray application by a device, comprising:
a) housing at least one diluent reservoir with a diluent; at least one formulation reservoir with a formulation comprising an active ingredient; at least one formulation flow rate control unit; a processing unit; at least one mixer unit; at least one spray unit; wherein the at least one formulation flow rate control unit is configured to regulate the volume flow of the formulation into the at least one mixer unit, wherein, the at least one mixer unit is configured to mix the diluent from the at least one diluent reservoir with the formulation comprising an active ingredient from the at least one formulation reservoir to obtain a mixture, wherein the at least one spray unit is configured to spray the mixture, and wherein the at least one spray unit is configured to implement pulse width modulation to spray the mixture;
b) determining a spraying pattern for a mixture comprising a diluent and a formulation comprising an active ingredient for a predefined area to be sprayed, wherein the spray application device is configured to spray a constant concentration of the active ingredient per hectare as a function of variable mixture spray volume;
c) determining by the processing unit of at least one instruction to control the at least one formulation rate control unit and the at least one spray unit to spray the spraying pattern on the predefined area as determined in step b);
d) spraying the mixture comprising a diluent and a formulation comprising an active ingredient on the predefined area.

The method allows to determine and spray certain predefined spraying pattern(s) which vary the spraying volume for a certain target area, e.g., gradually such as linearly, logarithmical, exponential, sigmoidal, or in logit steps while keeping the concentration of the active ingredient per hectare constant. Such spraying patterns are useful to answer scientific questions as well as to generate information in order to fulfill regulatory requirements. E.g., spraying pattern(s) can help to identify appropriate mixture ratio's between the diluent and the active ingredient in order to minimize phytotoxic effect(s) and to increase the biological efficacy of the active ingredient(s). If the active ingredients do have a dual activity such as e.g., a positive effect on the biomass on the plants to be treated as well as pest control activity, the method can also be used to identify appropriate mixture ratios between the diluent and the active ingredient to achieve the best outcome in regard to both activities of the active ingredient used.

In an example, the method of spray application by a spray application device according to the third aspect of the invention is provided, wherein a vehicle comprises the spray application device and at least one actuator to move the vehicle relative to the ground.

The use of a vehicle provides further accuracy to execute the method according the third aspect of the invention and ensure that the spraying pattern is sprayed as predefined before spraying. In particular, a steady movement speed of the vehicle can be more easily put into execution in comparison to when the spraying pattern is sprayed by e.g., by hand with a knapsack sprayer.

According to a fourth aspect, there is provided a computer program element for controlling a spray application device according to the first aspect and any of the associated examples, or for controlling a vehicle according to the second aspect and any of the associated examples wherein the computer program element when executed by a processor is configured to carry out the method according to the third aspect and any of the associated examples.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a spray application device for active ingredient(s) to agricultural crops;
Fig. 2 shows a schematic overview of a method of spray application by the spray application device including the determination of a predefined spray pattern;
Fig. 3a shows a detailed example of the spray application device of Fig. 1 in form of a backpack sprayer; and
Fig. 3b shows a detailed example of a unmanned aerial vehicle comprising a spray application device; and
Fig. 3c shows a detailed example of a ground vehicle comprising a spray application device in form of a boom sprayer.
Fig. 4a shows an example of a non-linear volume spraying pattern with linear changes in pulse width modulation and velocity.
Fig. 4b shows and example of a linear volume spraying pattern with non-linear changes in pulse width modulation and linear changes in velocity.
Fig. 4c shows and example of a sigmoid volume spraying pattern with non-linear changes in pulse width modulation and linear changes in velocity.

### DETAILED DESCRIPTION OF EMBODIMENTS

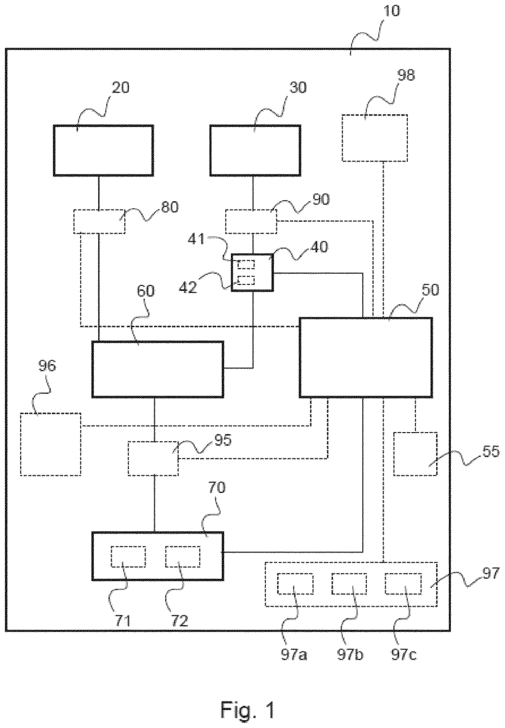

Fig. 1 shows a spray application device 10 in particular for application of an active ingredient to agricultural crops. The spray application device 10 comprises at least one diluent reservoir 20 for holding a diluent. The spray application device 10 also comprises at least one formulation reservoir 30 for holding a formulation comprising an active ingredient. The spray application device 10 further comprises at least one formulation flow rate control unit 40; a processing unit 50; at least one mixer unit 60 and at least one spray unit 70. The at least one formulation flow rate control unit 40 is configured to regulate the volume flow of the formulation into the at least one mixer unit 60. The at least one mixer unit 60 is configured to mix the diluent from the at least one diluent reservoir 20 with the formulation comprising an active ingredient from the at least one formulation reservoir 30 to obtain a mixture. The at least one spray unit 70 is configured to spray the mixture. The at least one spray unit 70 is configured to implement pulse width modulation to spray the mixture. The spray application device is configured to spray a constant concentration of the active ingredient per hectare as a function of variable mixture spray volume comprising a determination by the processing unit 50 of at least one instruction to control the at least one formulation rate control unit 40 and the at least one spray unit 70.

In an example, to spray a constant concentration of the active ingredient per hectare as a function of variable mixture spray volume refers to maintaining the dose of the active ingredient constant per hectare while changing the mixture spray volume per hectare with the spraying process.

In an example, the diluent of the at least one diluent reservoir is water.

In another example, the active ingredient of the formulation in the at least one formulation reservoir is a herbicide, insecticide, fungicide, pesticide, and/or a nutritional supplement.

In another example, the formulation comprising the active ingredient in the at least one formulation reservoir is a concentrate.

In an example, the at least one formulation flow control unit comprises a valve 41. In this example, the processing unit 50 is configured to control the flow of the formulation through the valve 41.

In an example, the at least one formulation flow control unit further comprises a flowmeter 42. The flowmeter measures the flow of the formulation to the at least one mixer unit 60. In this example, the data of the flow measured by the flowmeter 42 is transmitted to the processing unit 50. The processing unit is communicatively connected to the valve 41 and/or the pump 90 and is configured to control the flow of the formulation into the at least one mixer unit 60. A flowmeter that can be used in connection with this example is usually a flowmeter that is used in closed pipelines such as, for example, a magneto-inductive flowmeter, a float-type flowmeter, an ultrasonic flowmeter, a Coriolis mass flowmeter, a calorimetric flowmeter, or a vortex flowmeter. It is also conceivable to use a measuring orifice or a dynamic pressure probe.

In an example, the at least one mixer unit 60 refers to the place there the feeding of the diluent from the at least one diluent reservoir 20 and the feeding from the at least one formulation reservoir 30 come together. In an example, it is conceivable that upstream of the spray unit 70 there is a mixing chamber into which the first liquid and the second liquid are fed via two separate feed lines. The first liquid and the second liquid are then thoroughly mixed in the mixing chamber before the mixture then enters the spray unit 70. However, it is also conceivable that the at least one mixer unit 60 is part of the at least one spray unit 70 and the first and second liquids enter the spray unit 70 and exit the spray application device together as a mixture through the spray unit 70.

In an example, the spray unit 70 comprises at least one spraying nozzle 71. The at least one spraying nozzle 71 usually converts the liquid passing through it into droplets with a specific droplet size spectrum which depends, inter alia, on the pressure of the liquid and the geometry of the at least one spraying nozzle.

In an example, the at least one spraying nozzle is replaceable, with the result that a user can select at least one spraying nozzle which is adapted to the application and to the target object and which has a desired droplet size distribution and spatial distribution of the sprayed material. The at least one spraying nozzle can be, for example, in the form of a lance or pistol or in some other form.

In an example, the spray unit comprises a pulsing solenoid 72. The pulsing solenoid 72 controls flow rate through the nozzles via pulse width modulation.

In another example, the spray application device is configured to spray a constant concentration of the active ingredient per hectare as a function of variable mixture spray volume comprising a determination by the processing unit of instruction(s) to control the at least one formulation rate control unit and the at least one spray unit.

According to an example, an instruction to control the at least formulation rate control unit by the processing unit comprises an instruction to change the flow rate of the formulation from the at least one formulation reservoir into the at least one mixer unit.

In an example, the flow rate refers to the quantity of liquid flowing per unit of time in the direction of the at least one mixer unit. The term "quantity of liquid" is understood to mean the "volume".

According to an example, the implementation of the pulse width modulation comprises an instruction to change the duty cycle of the pulse width modulation.

In an example, the pulse width modulation comprises a duty cycle range of 0% to 100%, in particular 5% to 99% and more particular from 10% to 90%, and 20% to 80%.

Pulse width modulation (PWM) systems are used to turn on and off the at least one nozzle of the at least one spray unit: the duty cycle (how long the nozzles are switched on and spray; also called pulse width) is controlled so as to give an increasing or decreasing application volume in particular without changing the pressure. The duty cycle is expressed in percent. In an example, a duty cycle of 25% would mean that the nozzles are on for 25% of the time, thus applying one quarter of the mixture spray volume as set for a 100% duty cycle. The concentration of active ingredient reaching the nozzle(s) must be increased by a factor of 4 to counterbalance the reduction in volume applied. This is achieved by e.g., increasing the flow rate of the formulation comprising an active ingredient into the at least one mixer unit with the at least one formulation flow rate control unit.

In another example, the pulse width modulation comprises a pulse frequency of 5 Hz to 1000 Hz, in particular 10 Hz to 150 Hz.

The actual switching speed (or pulse frequency) is rated in hertz (Hz) - if the nozzle(s) can be pulsed at up to 50 times/sec this is shown as 50 Hz.

In an example, the droplet size spectrum of the mixture as sprayed by the at least one spray unit remains constant. The droplet size spectrum referring to the droplet size spectrum can be kept constant with the spray application device when the flow pressure of the mixture to be sprayed at the at least on spray unit is kept constant. A constant droplet size spectrum is desired in order to control effects such as drift during spraying or maintaining a deposit structure in a canopy. Overall, this leads to better and more consistent spraying results on the field. Droplet size spectrums refers to the droplet sizes that at least one spray unit produces. This can also be described with Volume Median Diameter (VMD also known as DV0.5) and Relative Span (RS). VMD refers to the midpoint droplet size (median) where half of the volume of spray is in droplets smaller and half of the volume is in droplets larger than the median.

Relative Span (RS) refers to a value determined by subtracting the DV0.1 value (10% of the volume of spray is in droplets smaller than this value) from the DV0.9 value (10% of the volume of spray is in droplets larger than this value) and dividing by the DV0.5. The smaller this number, the less variation there is between the size of the droplets in the spray spectrum.

In an example, the droplet size spectrum can be kept constant by applying the same spraying pressure and by using the same at least one nozzle throughout the spraying process.

In another example, the volume flow of the diluent into the at least one mixer unit during spraying remains constant.

The flow of the diluent from the at least one diluent reservoir into the at least one mixer unit is kept constant. This can be achieved e.g., by applying a constant flow pressure of e.g., 2 bar. By doing so it is also convenient to achieve a constant flow pressure of the mixture to be sprayed at the at least one spray unit.

According to an example, the spray application device comprises at least one sensor 98 configured to measure the movement speed of the spray application device relative to the ground and wherein the determination by the processing unit is based on the measurement of the movement speed by the at least one sensor.

In an example, the at least one sensor 98 configured to measure a speed of the device relative to the ground comprises a GPS system. In this example, the at least one sensor 98 than coincides with the GPS 97a.

In an example, the at least one sensor 98 configured to measure a speed of the device relative to the ground comprises a laser reflectance based system.

In an example, the at least one sensor 98 configured to measure a speed of the device relative to the ground comprises a system linked to the transmission of the device.

According to an example, the processing unit is configured to determine an instruction to decrease the flow rate of the formulation from the at least one formulation reservoir into the at least one mixer unit as a function of an increase of the duty cycle of the pulse width modulation provided that the movement speed of the spray application device relative to the ground is constant and wherein the processing unit is configured to determine an instruction to increase the flow rate of the formulation from the at least one formulation reservoir into the at least one mixer unit as a function of a decrease of the duty cycle of the pulse width modulation provided that the movement speed of the spray application device relative to the ground is constant.

An increase in the duty cycle refers to the at least one spray unit where the at least one nozzles are switch on for a longer period of time (within the cycle). As an example an increase in the duty cycle from 20% to 80% means that the at least one nozzle is switched on 4 times more often. As a consequence, the flow rate of the formulation needs to be decreased accordingly provided that the movement speed of the spray application relative to the ground remains constant. In analogy, the flow rate of the formulation into the at least one mixer unit needs to be increased when the duty cycle is decreased provided that the movement speed of the spray application relative to the ground remains constant.

In an example, the spray application device comprises at least one pump 80 to feed the diluent from the at least one diluent reservoir into the at least one mixer unit and at least one pump 90 to feed the formulation comprising an active ingredient from the at least one formulation reservoir into the at least one mixer unit.

In this example, both liquids are fed in the direction of the at least one mixer unit by the respective pump. As a result, corresponding reservoirs can be operated in an unpressurized fashion. They can be fabricated from more lightweight and flexible materials than the pressure tanks of the known compression sprayers.

The two liquids leave the at least one spray unit through the spraying nozzle together as a mixture. The mixing ratio is regulated automatically with the processing unit which is configured to control the pump(s) as well as the formulation flow rate control unit.

In an example, the pressure of the pump(s) is kept constant during spraying while the amount of the formulation in the mixture is controlled with the formulation flow rate control unit.

In an example, the spray application device further comprises a pressure sensor 95 which measures the pressure within the spray unit, wherein the pressure sensor 95 is connected to the processing unit and wherein the processing unit is configured to keep the pressure upstream of the spraying unit within a predefined range in particular from 1 to 5 bar, more particular at a constant rate within the pressure range of 1 to 5 bar. If the diluent and the formulation are fed in the direction of the at least one mixer unit, a pressure builds up upstream of the at least one spray unit. In order to generate a constant spraying pattern, it is convenient for this pressure to remain constant during the spraying process. In order to ensure this, a pressure sensor is connected to the processing unit which regulates the flow of the diluent and the formulation in such a way that the measured pressure remains constant.

According to an example, the spray application device further comprises an input unit 55, wherein the input unit is configured to enable a user of the spray application device to provide information relating to a spraying pattern for a predefined area and wherein the determination by the processing unit is based on the information provided by the user.

In an example, the input unit refers to a physical or virtual keypad or keyboard.

In an example, spraying pattern refers to a mixture spray volume change over a predefined area while keeping the concentration of the active ingredient per hectare constant.

In an example, a predefined area refers to a mapped crop field(s).

In another example, the mixture spray volume change over time during spraying on a predefined area is linear or non-linear, in particular logarithmical, exponential, sigmoidal, and/or logit. In other words, the volume change of the diluted formulation (also herein referred to as mixture) during the spraying process can be non-linear such as e.g., random. However, for the purpose to examine the effects of changing volumes while having at the same time a constant active ingredient concentration, it is possible to gradually change the volume in e.g., linearly, logarithmical, exponential, sigmoidal, and/or logit steps. In this context, it is necessary to select an area to be sprayed beforehand (e.g., 100 m in length and 2 m in width while the spray application device covers the 2 m in width with a boom sprayer and proceeds with spraying until it reaches the end of the 100 m in length).

According to an example, the spray application device further comprises at least one camera 96, wherein the camera is configured to acquire at least one image, and wherein the spray application device is configured to spray a constant concentration of the active ingredient per hectare as a function of variable mixture spray volume comprising a determination by the processing unit of at least one instruction to control the at least one formulation rate control unit and/or the at least one spray unit, wherein the determination by the processing unit is based on image analysis by the processing unit of at least one image of the environment acquired by the camera.

In an example, the analysis of the at least one image is conducted to determine by the processing unit of at least one instruction to control the at least one formulation rate control unit and/or (in particular "and") the at least one spray unit and the analysis comprises a determination of at least one type of weed, and/or comprises a determination of at least one type of disease, and/or comprises a determination of at least one type of pest, and/or comprises a determination of at least one type of insect, and/or comprises a determination of at least one type of nutritional deficiency, and/or comprises a determination of at least one type of abiotic stress.

In other words, the at least one spray unit is activated only if the target subject matter has been identified by the image analysis. Also the degree of activation which means in this context in particular the assessment of the amount of mixture spray volume which is required to be applied (while the formulation concentration per hectare remains constant) is based on image analysis. Therefore, the mixture can be applied in a manner to account for there being weeds to be controlled at a location and wherein the type of weed to be controlled can be taken into account, and/or account for their being diseases to be controlled at a location and wherein the type of disease to be controlled can be taken into account, and/or account for their being pests to be controlled at a location and wherein the type of pest to be controlled can be taken into account, and/or account for their being insects to be controlled at a location and wherein the type of insect to be controlled can be taken into account, and/or account for their being nutritional deficiencies to be mitigated at a location and wherein the type of nutritional deficiency to be mitigated can be taken into account and/or account for their being abiotic stress to be mitigated at a location and wherein the type of abiotic stress to be mitigated can be taken into account.

In an example, analysis of the at least one image comprises utilization of a machine learning algorithm.

In an example, the machine learning algorithm comprises a decision tree algorithm.

In an example, the machine learning algorithm comprises an artificial neural network.

In an example, the machine learning algorithm has been taught on the basis of a plurality of images. In an example, the machine learning algorithm has been taught on the basis of a plurality of images containing imagery of at least one type of weed, and/or at least of type of plant suffering from one or more diseases, and/or at least one type of plant suffering from insect infestation from one or more types of insect, and/or at least one type of insect (when the imagery has sufficient resolution), and/or at least one type of plant suffering from one or more pests, and/or at least one type of plant suffering from one or more types of nutritional deficiency and/or at least one type of plant suffering from one or more types of abiotic stress.

In an example, the machine learning algorithm has been taught on the basis of a plurality of images containing such imagery.

The imagery acquired by the camera 96 is at a resolution that enables vegetation to be identified as vegetation and indeed can be at resolution that enables one type of weed to be differentiated from another type of weed. The imagery can be at a resolution that enables pest or insect infested crops to be determined.

In another example, the spray application device further comprises location determining means 97 in particular one or more of GPS 97a, an inertial navigation system 97b, or an image based location system 97c.

Location determining means 97 are e.g. useful to the location where it needs to be sprayed or digitally map the application dose onto the area sprayed in order to correctly link biological (or other) results to the actual application volume at that point in the spray swath. The spray application device can have a Global Positioning System (GPS) 97a and this enables the location of acquired imagery to be determined. For example the orientation of camera 96 and the position of the spray application device 10 when imagery was acquired can be used to determine the geographical footprint of the image at the ground plane. The spray application device can also have inertial navigation systems 97b, based for example on laser gyroscopes. The camera 96 passes the acquired imagery to the processing unit 50. Image analysis software operates on the processing unit 50. The image analysis software can use feature extraction, such as edge detection, and object detection analysis that for example can identify structures such in and around the field such as buildings, roads, fences, hedges, etc. Thus, on the basis of known locations of such objects, the processing unit can patch the acquired imagery to in effect create a synthetic representation of the environment that can in effect be overlaid over a geographical map of the environment. Thus, the geographical location of each image can be determined, and there need not be associated GPS and/or inertial navigation based information associated with acquired imagery. In other words, an image based location system 97c can be used to locate the device 10. However, if there is GPS and/or inertial navigation information available then such image analysis, that can place specific images at specific geographical locations only on the basis of the imagery, is not required. Although, if GPS and/or inertial navigation based information is available then such image analysis can be used to augment the geographical location associated with an image. The processing unit 50 runs further image processing software. This software analyses an image to determine the areas within the image where vegetation is to be found, and also analyses the imagery to determine where vegetation is not to be found (for example at pathways across a field, around the borders of a field and even tractor wheel tracks across a field). This latter information can be used to determine where the mixture is not required to be applied. Vegetation can be detected based on the shape of features within acquired images, where for example edge detection software is used to delineate the outer perimeter of objects and the outer perimeter of features within the outer perimeter of the object itself; organic material between ballast can be detected in a similar manner when the device is used for weed control along a railway track environment. A database of vegetation imagery can be used in helping determine if a feature in imagery relates to vegetation or not, using for example a trained machine learning algorithm such as an artificial neural network or decision tree analysis. The camera can acquire multi-spectral imagery, with imagery having information relating to the colour within images, and this can be used alone, or in combination with feature detection to determine where in an image vegetation is to be found.

In an example, the location determining means is configured to provide the processing unit with at least one location associated with the camera when the at least one image was acquired. The location can be a geographical location, with respect to a precise location on the ground, or can be a location on the ground that is referenced to another position or positions on the ground, such as a boundary of a field. In other words, an absolute geographical location can be utilized or a location on the ground that need not be known in absolute terms, but that is referenced to a known location can be used. Thus, by correlating an image with the location where it was acquired, the at least one spray unit can be accurately activated to that location.

In an example, the location is an absolute geographical location.

In an example, the location is a location that is determined with reference to a known location or locations. In other words, an image can be determined to be associated with a specific location on the ground, without knowing its precise geographical position, but by knowing the location where an image was acquired with respect to known position(s) on the ground the spray application device can then be activated at a later time at that location by moving the spray application device to that location to move to that location at activate its at least one spray unit at that location.

In an example, a GPS unit 97a is used to determine, and/or is used in determining, the location, such as the location of the camera when specific images were acquired.

In an example, an inertial navigation unit 97b is used alone, or in combination with a GPS, to determine the location, such as the location of the camera when specific images were acquired. Thus for example, the inertial navigation unit, comprising for example one or more laser gyroscopes, is calibrated or zeroed at a known location and as it moves with the at least one camera the movement away from that known location in x, y, and z coordinates can be determined, from which the location of the at least one camera when images were acquired can be determined.

In an example, image processing of acquired imagery is used alone, or in combination with a GPS, or in combination with a GPS and inertial navigation unit, to determine the location, such as the location of the camera when specific images were acquired. In other words, as the spray application device moves it can acquire imagery that is used to render a synthetic representation of the environment and from specific markers, such as the position of trees, field boundaries, roads etc. the device can determine its position within that synthetic environment from imagery it acquires.

Another example refers the spray application device, wherein the at least one spray unit is configured to be activated at a location determined by a processing unit based on image analysis of at least one image of the environment acquired by a camera.

According to an example, a vehicle 400 comprises a spray application device according to the invention and at least one actuator 410 to move the vehicle relative to the ground.

The components as discussed above in the context of the spray application device can be part of a vehicle such as a manned or unmanned aerial vehicle (e.g., a plane, helicopter or drone etc.) or a manned or unmanned ground vehicle (e.g., a robotic device, a boom sprayer on a tractor, etc.). In an example, the data communication between different components of the vehicle can occur via networks such as local area networks, wide area networks, internetworks or internet, using wireline or wireless links, including terrestrial or satellite links.

In an example, the at least one actuator 410 to move the vehicle refers to a mechanical device that converts energy into motion. The source of energy may be, for example, an electric current, hydraulic fluid pressure, pneumatic pressure, mechanical energy, thermal energy, or magnetic energy. For example, an electric motor assembly may be a type of actuator that converts electric current into a rotary motion, and may further convert the rotary motion into a linear motion to execute movement. In this way, an actuator may include a motor, gear, linkage, wheel, screw, pump, piston, switch, servo, or other element for converting one form of energy into motion.

According to an example, a vehicle 400 comprises a spray application device and the spray application device is configured to spray a constant concentration of the active ingredient per hectare as a function of variable mixture spray volume comprising a determination by the processing unit of at least one instructions to control the at least one formulation rate control unit, the at least one spray unit and/or the movement speed of the vehicle relative to the ground via the at least one actuator.

In an example, the determination by the processing unit comprises instructions to control the at least one formulation rate control unit and the at least one spray unit.

In an example, the determination by the processing unit comprises an instruction to decrease the flow rate of the formulation from the at least one formulation reservoir into the at least one mixer unit as a function of an increase of the duty cycle of the pulse width modulation provided that the movement speed of the vehicle relative to the ground is constant and wherein the determination by the processing unit comprises an instruction to increase the flow rate of the formulation from the at least one formulation reservoir into the at least one mixer unit as a function of a decrease of the duty cycle of the pulse width modulation provided that the movement speed of the vehicle relative to the ground is constant.

In another example, the determination by the processing unit comprises instructions to control the at least one formulation rate control unit and the movement speed of the vehicle relative to the ground via the at least one actuator.

In an example, the determination by the processing unit comprises an instruction to decrease the flow rate of the formulation from the at least one formulation reservoir into the at least one mixer unit as a function of a decrease of the movement speed of the vehicle relative to the ground via the at least one actuator provided that the duty cycle of the pulse width modulation is constant and wherein the determination by the processing unit comprises an instruction to increase the flow rate of the formulation from the at least one formulation reservoir into the at least one mixer unit as a function of an increase of the movement speed of the vehicle relative to the ground via the at least one actuator provided that the duty cycle of the pulse width modulation is constant.

In another example, the determination by the processing unit comprises instructions to control the at least one spray unit and the movement speed of the vehicle relative to the ground via the at least one actuator.

In an example, the determination by the processing unit comprises an instruction to decrease the duty cycle of the pulse width modulation as a function of a decrease of the movement speed of the vehicle relative to the ground via the at least one actuator provided that the flow rate of the formulation from the at least one formulation reservoir into the at least one mixer unit is constant and wherein the determination by the processing unit comprises an instruction to increase the flow rate of the formulation from the at least one formulation reservoir into the at least one mixer unit as a function of an increase of the movement speed of the vehicle relative to the ground via the at least one actuator provided that the flow rate of the formulation from the at least one formulation reservoir into the at least one mixer unit is constant.

In another example, the determination by the processing unit comprises instructions to control the at least one formulation rate control unit, the at least one spray unit and the movement speed of the vehicle relative to the ground via the at least one actuator.

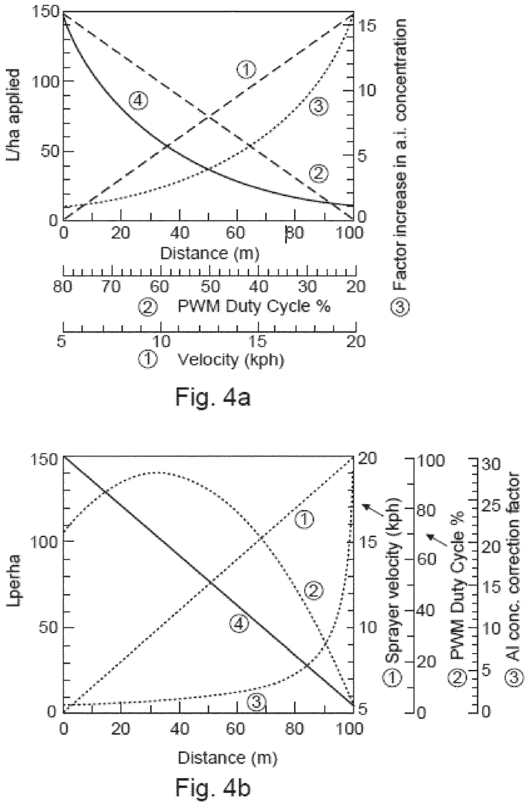

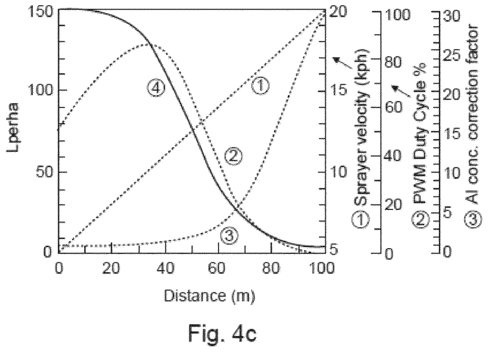

In another example, the movement speed of the vehicle relative to the ground during spraying changes linearly, in particular increases or decreases linearly, in particular within a predefined speed range of 1 to 50 kph, more particular within a speed range of 3 to 30 kph (see also Fig 4a, Fig 4b, Fig 4c).

In another example, the vehicle comprises a spray application device according to the invention and the duty cycle of the pulse width modulation has a local maximum peak during spraying as a function of a linear change of the movement speed of the vehicle relative to the ground within a predefined speed range, in particular within a speed range of 1 to 50 kph, more particular within a speed range of 3 to 30 kph (see also Fig. 4b and Fig 4c).

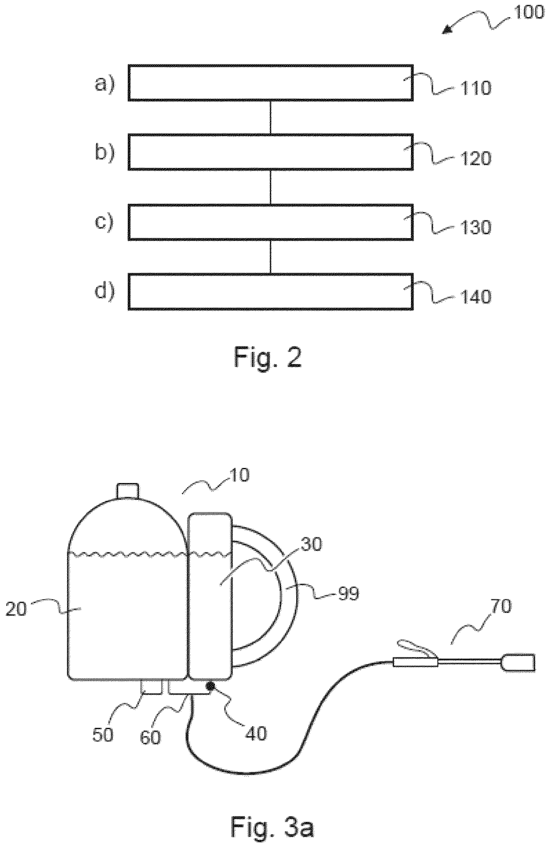

Fig. 2 shows a method 100 of spray application by a spray application device in particular for active ingredient(s) to agricultural crops in its basic steps. The method 100 comprises: a housing step 110, also referred to as step a), housing at least one diluent reservoir with a diluent; at least one formulation reservoir with a formulation comprising an active ingredient; at least one formulation flow rate control unit; a processing unit; at least one mixer unit; at least one spray unit; wherein the at least one formulation flow rate control unit is configured to regulate the volume flow of the formulation into the at least one mixer unit, wherein, the at least one mixer unit is configured to mix the diluent from the at least one diluent reservoir with the formulation comprising an active ingredient from the at least one formulation reservoir to obtain a mixture, wherein the at least one spray unit is configured to spray the mixture, and wherein the at least one spray unit is configured to implement pulse width modulation to spray the mixture;
in a determining step 120, also referred to as step b), determining a spraying pattern for a mixture comprising a diluent and a formulation comprising an active ingredient for a predefined area to be sprayed, wherein the spray application device is configured to spray a constant concentration of the active ingredient per hectare as a function of variable mixture spray volume;
in a determining step 130, also referred to as step c), determining by the processing unit of at least one instruction to control the at least one formulation rate control unit andthe at least one spray unit to spray the spraying pattern on the predefined area as determined in step b);
in a spraying step 140, also referred to as step d), spraying the mixture comprising a diluent and a formulation comprising an active ingredient on the predefined area.

In another example, in step a) wherein the device houses at least one sensor configured to measure the movement speed of the spray application device relative to the ground and wherein the determination by the processing unit is based on the measurement of the movement speed by the at least one sensor.

In another example, in step a) wherein the spray application device further houses an input unit, wherein the input unit is configured to enable a user of the spray application device to provide information relating to a spraying pattern for a predefined area and wherein the determination by the processing unit is based on the information provided by the user.

In another example, in step a) wherein the spray application device further houses at least one camera, wherein the camera is configured to acquire at least one image, and wherein the spray application device is configured to spray a constant concentration of the active ingredient per hectare as a function of variable mixture spray volume comprising a determination by the processing unit of at least one instruction to control the at least one formulation rate control unit and/or the at least one spray unit, wherein the determination by the processing unit is based on image analysis by the processing unit of at least one image of the environment acquired by the camera.

In another example, in step b) wherein the spraying pattern relates to a mixture spray volume change over a predefined area while the concentration of the active ingredient per hectare is kept constant and wherein the mixture spray volume change is linear or non-linear, in particular logarithmical, exponential, sigmoidal and/or logit.

In another example, in step b) providing the information relating to the spraying pattern and the predefined area to the input unit (by a user).

In another example, in step c) wherein the instruction to control the at least formulation rate control unit by the processing unit comprises an instruction to change the flow rate of the formulation from the at least one formulation reservoir into the at least one mixer unit.

In another example, in step c) wherein the implementation of the pulse width modulation comprises an instruction to change the duty cycle of the pulse width modulation.

In another example, in step c) wherein the processing unit is configured to determine an instruction to decrease the flow rate of the formulation from the at least one formulation reservoir into the at least one mixer unit as a function of an increase of the duty cycle of the pulse width modulation provided that the movement speed of the spray application device relative to the ground is constant and wherein the processing unit is configured to determine an instruction to increase the flow rate of the formulation from the at least one formulation reservoir into the at least one mixer unit as a function of a decrease of the duty cycle of the pulse width modulation provided that the movement speed of the spray application device relative to the ground is constant.

According to an example, the method 100 of spray application by a spray application device is provided, wherein a vehicle comprises the spray application device and at least one actuator to move the vehicle relative to the ground.

In an example, the method 100 of spray application by a spray application device is provided, wherein a vehicle comprises the spray application device and wherein spray application device is configured to spray a constant concentration of the active ingredient per hectare as a function of variable mixture spray volume comprising a determination by the processing unit of at least one instruction to control the at least one formulation rate control unit, the at least one spray unit and/or the movement speed of the vehicle relative to the ground via the at least one actuator.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described device and/or vehicle. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both a computer program that right from the beginning uses the invention and computer program that by means of an update turns an existing program into a program that uses invention.

Furthermore, the computer program element might be able to provide all necessary steps to fulfil the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

Figs. 3a shows a detailed example of the spray application device 10 of Fig. 1 in form of a backpack sprayer. In this figure, a diluent reservoir 20 with diluent and a formulation reservoir 30 with a formulation comprising an active ingredient is depicted. Beneath the reservoirs the liquids feed into a mixer unit 60. From the mixer unit 60 the mixture can be sprayed to a target area via a spray unit 70 which is illustrated in this example in form of a spraying lance. A processing unit 50 as well as a formulation flow rate control unit 40 are shown in this figure beneath the liquid reservoirs. Furthermore, backpack straps 99 to enable a person to carry spray application device on the back are illustrated as well.

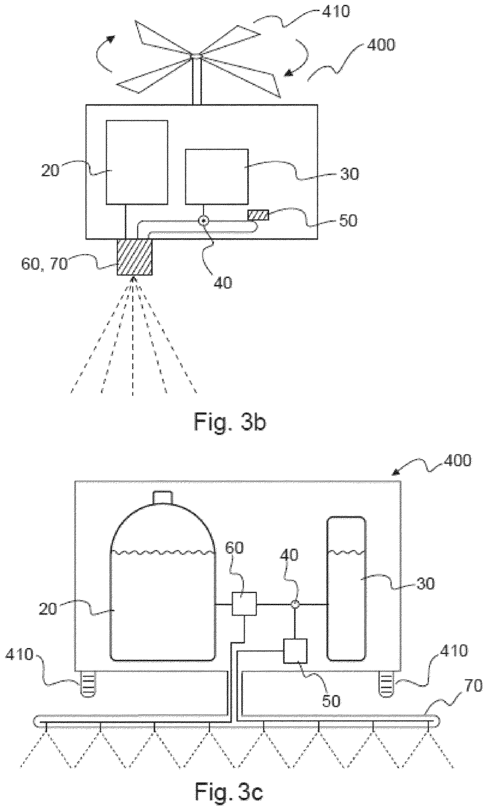

Fig. 3b shows a detailed example of a unmanned aerial vehicle (UAV) 400 such as a drone comprising a spray application device. The UAV comprises a diluent reservoir 20 and a formulation reservoir 30. The formulation from the formulation reservoir feeds via a formulation flow rate control unit 40 into the mixer unit 60 which is part of the spray unit 70. In this example, the mixing process of the formulation and the diluent takes place in the spray unit 70 e.g., directly before the mixture feeds into the spraying nozzle or in the nozzle itself. The processing unit 50 is shown as well. On top of the UAV propellers (as a part of the actuator to move the UAV; 410) are schematically illustrated.

Fig. 3c shows a detailed example of a ground vehicle 400 comprising a spray application device in form of a boom sprayer. The ground vehicle 400 comprises a diluent reservoir 20 and a formulation reservoir 30. The liquids from the reservoirs feed into the mixer unit 60. The formulation flow rate control unit 40 is configured to regulate the volume flow of the formulation into the mixer unit. The processing unit 50 is shown as well. The mixture is sprayed with a spray unit 70 illustrated, in this example, in form of a boom sprayer with various nozzles. The wheels of the ground vehicle (as a part of the actuator to move the vehicle; 410) are also schematically illustrated.

Fig. 4a shows an example of a non-linear volume spraying pattern with linear changes in pulse width modulation and velocity (x-axes). In this example, along the application swath (100 m in length), the velocity of the vehicle comprising a spray application device is increased linearly from 5 kph to 20 kph (dotted line 1). The pulse width modulation duty cycle decreases linearly (within a range of 80% - 20%: dotted line 2). The active ingredient (a.i.) concentration during the spraying process increases non-linearly (dotted line 3). As well, a non-linear decrease of the spraying volume (liter per hectare; continuous line 4) is achieved with these specifications.

Fig. 4b shows and example of a linear volume spraying pattern with non-linear changes in pulse width modulation, non-linear changes in active ingredient concentration, and linear changes in velocity combining to give a linear reduction in application volume (l/ha) and a constant active ingredient (g/ha) application rate. In this example, along the application swath (100 m in length), the velocity of the vehicle comprising a spray application device is increased linearly from 5 kph to 20 kph (dotted line 1). The pulse width modulation duty cycle changes within a range starting from 74%, decreasing to 8%, with a local maximum peak of 93% during the spraying process (dotted line 2). The active ingredient (a.i.) concentration during the spraying process needs to increase non-linearly (dotted line 3). A linear decrease of the spraying volume (continuous line 4) can be achieved with these specifications, with a constant active ingredient (g/ha) application rate.

Fig. 4c shows and example of a sigmoid volume spraying pattern with non-linear changes in pulse width modulation, non-linear changes in active ingredient concentration, and linear changes in velocity combining to give a non-linear reduction (here, sigmoid) in application volume (l/ha) and a constant active ingredient (g/ha) application rate. In this example, along the application swath (100 m in length), the velocity of the vehicle comprising a spray application device is increased linearly from 5 kph to 20 kph (dotted line 1). The pulse width modulation duty cycle changes within a range from 50% to 0% and has a local maximum peak of 85% during the spraying process (dotted line 2). The active ingredient (a.i.) concentration during the spraying process needs to increase non-linearly (dotted line 3). A sigmoidal decrease of the spraying volume (continuous line 4) can be achieved with these specifications, with a constant active ingredient (g/ha) application rate.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A spray application device (10), comprising:
- at least one diluent reservoir (20) for holding a diluent;
- at least one formulation reservoir (30) for holding a formulation comprising an active ingredient;
- at least one formulation flow rate control unit (40);
- a processing unit (50);
- at least one mixer unit (60);
- at least one spray unit (70);
wherein, the at least one formulation flow rate control unit is configured to regulate the volume flow of the formulation into the at least one mixer unit, and
wherein, the at least one mixer unit is configured to mix the diluent from the at least one diluent reservoir with the formulation comprising an active ingredient from the at least one formulation reservoir to obtain a mixture, and
wherein the at least one spray unit is configured to spray the mixture,
wherein, the at least one spray unit is configured to implement pulse width modulation to spray the mixture, and
**characterized in that** the spray application device is configured to spray a constant concentration of the active ingredient per hectare as a function of variable mixture spray volume comprising a determination by the processing unit of at least one instruction to control the at least one formulation rate control unit and the at least one spray unit to maintain the dose of the active ingredient constant per hectare while changing the application mixture volume per hectare.

2. Spray application device according to claim 1, wherein an instruction to control the at least one formulation rate control unit by the processing unit comprises an instruction to change the flow rate of the formulation from the at least one formulation reservoir into the at least one mixer unit.

3. Spray application device according to any one of the preceding claims, wherein the implementation of the pulse width modulation comprises an instruction to change the duty cycle of the pulse width modulation.

4. Spray application device according to any of the preceding claims, wherein the spray application device comprises at least one sensor (98) configured to measure the movement speed of the spray application device relative to the ground and wherein the determination by the processing unit is based on the measurement of the movement speed by the at least one sensor.

5. Spray application device according to any of the preceding claims, wherein the processing unit is configured to determine an instruction to decrease the flow rate of the formulation from the at least one formulation reservoir into the at least one mixer unit as a function of an increase of the duty cycle of the pulse width modulation provided that the movement speed of the spray application device relative to the ground is constant and wherein the processing unit is configured to determine an instruction to increase the flow rate of the formulation from the at least one formulation reservoir into the at least one mixer unit as a function of a decrease of the duty cycle of the pulse width modulation provided that the movement speed of the spray application device relative to the ground is constant.

6. Spray application device according to any of one of the preceding claims, wherein the spray application device further comprises an input unit (55), wherein the input unit is configured to enable a user of the spray application device to provide information relating to a spraying pattern for a predefined area and wherein the determination by the processing unit is based on the information provided by the user.

7. Spray application device according to any of one of the preceding claims, wherein the spray application device further comprises comprises location determining means (97) , wherein the spray application device is configured to spray a constant concentration of the active ingredient per hectare as a function of variable mixture spray volume comprising a determination by the processing unit of at least one instruction to control the at least one formulation rate control unit and the at least one spray unit, wherein the determination by the processing unit is based on the location of the spray application device as determined by the location determining means (97).

8. A vehicle (400) comprising a spray application device according any one of the preceding claims and at least one actuator (410) to move the vehicle relative to the ground.

9. Vehicle according to claim 8, wherein the spray application device is configured to spray a constant concentration of the active ingredient per hectare as a function of variable mixture spray volume comprising a determination by the processing unit of at least one instruction to control the at least one formulation rate control unit, the at least one spray unit and the movement speed of the vehicle relative to the ground via the at least one actuator.

10. A method (100) of spray application by a spray application device, comprising:
a) housing (110) at least one diluent reservoir with a diluent; at least one formulation reservoir with a formulation comprising an active ingredient; at least one formulation flow rate control unit; a processing unit; at least one mixer unit; at least one spray unit; wherein the at least one formulation flow rate control unit is configured to regulate the volume flow of the formulation into the at least one mixer unit, wherein, the at least one mixer unit is configured to mix the diluent from the at least one diluent reservoir with the formulation comprising an active ingredient from the at least one formulation reservoir to obtain a mixture, wherein the at least one spray unit is configured to spray the mixture, and wherein the at least one spray unit is configured to implement pulse width modulation to spray the mixture;
b) determining (120) a spraying pattern for a mixture comprising a diluent and a formulation comprising an active ingredient for a predefined area to be sprayed, wherein the spray application device is configured to spray a constant concentration of the active ingredient per hectare as a function of variable mixture spray volume;
c) determining (130) by the processing unit of at least one instruction to control the at least one formulation rate control unit and the at least one spray unit to spray the spraying pattern on the predefined area as determined in step b);
d) spraying (140) the mixture comprising a diluent and a formulation comprising an active ingredient on the predefined area.

11. Method of spray application by a spray application device according to claim 10, wherein a vehicle comprises the spray application device and at least one actuator to move the vehicle relative to the ground.

12. A computer program element for controlling a spray application device according to any one of claims 1 to 7, or for controlling a vehicle according to any one of claims 8 to 9, wherein the computer program element when executed by a processor is configured to carry out the method of any one of claims 10 and 11.

## Patentansprüche

1. Sprühapplikationsvorrichtung (10), umfassend:
- mindestens einen Verdünnungsmittelbehälter (20) zum Fassen eines Verdünnungsmittels;
- mindestens einen Formulierungsbehälter (30) zum Fassen einer einen Wirkstoff umfassenden Formulierung;
- mindestens eine Steuereinheit (40) für eine Formulierungsströmungsrate;
- eine Verarbeitungseinheit (50);
- mindestens eine Mischereinheit (60);
- mindestens eine Sprüheinheit (70);
wobei die mindestens eine Steuereinheit für die Formulierungsströmungsrate dazu ausgelegt ist, die Volumenströmung der Formulierung in die mindestens eine Mischereinheit zu regeln, und
wobei die mindestens eine Mischereinheit dazu ausgelegt ist, das Verdünnungsmittel aus dem mindestens einen Verdünnungsmittelbehälter mit der einen Wirkstoff umfassenden Formulierung aus dem mindestens einen Formulierungsbehälter zu mischen, um ein Gemisch zu erhalten, und
wobei die mindestens eine Sprüheinheit dazu ausgelegt ist, das Gemisch zu versprühen,
wobei die mindestens eine Sprüheinheit dazu ausgelegt ist, eine Pulsweitenmodulation zu implementieren, um das Gemisch zu versprühen, und
**dadurch gekennzeichnet, dass** die Sprühapplikationsvorrichtung dazu ausgelegt ist, eine konstante Konzentration des Wirkstoffs pro Hektar in Abhängigkeit von einem variablen Gemischsprühvolumen zu versprühen, umfassend eine Bestimmung, durch die Verarbeitungseinheit, mindestens einer Anweisung zum Steuern der mindestens einen Steuereinheit für die Formulierungsrate und der mindestens einen Sprüheinheit, um die Dosis des Wirkstoffs pro Hektar bei Ändern des Applikationsgemischvolumens pro Hektar konstant zu halten.

2. Sprühapplikationsvorrichtung nach Anspruch 1, wobei eine Anweisung zum Steuern der mindestens einen Steuereinheit für die Formulierungsrate durch die Verarbeitungseinheit eine Anweisung zum Ändern der Strömungsrate der Formulierung aus dem mindestens einen Formulierungsbehälter in die mindestens eine Mischereinheit umfasst.

3. Sprühapplikationsvorrichtung nach einem der vorhergehenden Ansprüche, wobei die Implementierung der Pulsweitenmodulation eine Anweisung zum Ändern des Tastverhältnisses der Pulsweitenmodulation umfasst.

4. Sprühapplikationsvorrichtung nach einem der vorhergehenden Ansprüche, wobei die Sprühapplikationsvorrichtung mindestens einen Sensor (98) umfasst, der dazu ausgelegt ist, die Bewegungsgeschwindigkeit der Sprühapplikationsvorrichtung relativ zum Boden zu messen, und wobei die Bestimmung durch die Verarbeitungseinheit auf der Messung der Bewegungsgeschwindigkeit durch den mindestens einen Sensor basiert.

5. Sprühapplikationsvorrichtung nach einem der vorhergehenden Ansprüche, wobei die Verarbeitungseinheit dazu ausgelegt ist, eine Anweisung zum Verringern der Strömungsrate der Formulierung aus dem mindestens einen Formulierungsbehälter in die mindestens eine Mischereinheit in Abhängigkeit von einer Erhöhung des Tastverhältnisses der Pulsweitenmodulation unter der Voraussetzung, dass die Bewegungsgeschwindigkeit der Sprühapplikationsvorrichtung relativ zum Boden konstant ist, zu bestimmen und wobei die Verarbeitungseinheit dazu ausgelegt ist, eine Anweisung zum Erhöhen der Strömungsrate der Formulierung aus dem mindestens einen Formulierungsbehälter in die mindestens eine Mischereinheit in Abhängigkeit von einer Verringerung des Tastverhältnisses der Pulsweitenmodulation unter der Voraussetzung, dass die Bewegungsgeschwindigkeit der Sprühapplikationsvorrichtung relativ zum Boden konstant ist, zu bestimmen.

6. Sprühapplikationsvorrichtung nach einem der vorhergehenden Ansprüche, wobei die Sprühapplikationsvorrichtung ferner eine Eingabeeinheit (55) umfasst, wobei die Eingabeeinheit dazu ausgelegt ist, einem Benutzer der Sprühapplikationsvorrichtung zu ermöglichen, Informationen in Bezug auf ein Sprühmuster für einen vordefinierten Bereich bereitzustellen, und wobei die Bestimmung durch die Verarbeitungseinheit auf den durch den Benutzer bereitgestellten Informationen basiert.

7. Sprühapplikationsvorrichtung nach einem der vorhergehenden Ansprüche, wobei die Sprühapplikationsvorrichtung ferner Positionsbestimmungsmittel (97) umfasst, wobei die Sprühapplikationsvorrichtung dazu ausgelegt ist, eine konstante Konzentration des Wirkstoffs pro Hektar in Abhängigkeit von einem variablen Gemischsprühvolumen zu versprühen, umfassend eine Bestimmung, durch die Verarbeitungseinheit, mindestens einer Anweisung zum Steuern der mindestens einen Steuereinheit für die Formulierungsrate und der mindestens einen Sprüheinheit, wobei die Bestimmung durch die Verarbeitungseinheit auf der durch die Positionsbestimmungsmittel (97) bestimmten Position der Sprühapplikationsvorrichtung basiert.

8. Fahrzeug (400), umfassend eine Sprühapplikationsvorrichtung nach einem der vorhergehenden Ansprüche und mindestens einen Aktuator (410) zum Bewegen des Fahrzeugs relativ zum Boden.

9. Fahrzeug nach Anspruch 8, wobei die Sprühapplikationsvorrichtung dazu ausgelegt ist, eine konstante Konzentration des Wirkstoffs pro Hektar in Abhängigkeit von einem variablen Gemischsprühvolumen zu versprühen, umfassend eine Bestimmung, durch die Verarbeitungseinheit, mindestens einer Anweisung zum Steuern der mindestens einen Steuereinheit für die Formulierungsrate, der mindestens einen Sprüheinheit und der Bewegungsgeschwindigkeit des Fahrzeugs relativ zum Boden über den mindestens einen Aktuator.

10. Verfahren (100) zur Sprühapplikation durch eine Sprühapplikationsvorrichtung, umfassend:
a) Aufnehmen (110) mindestens eines Verdünnungsmittelbehälters mit einem Verdünnungsmittel; mindestens eines Formulierungsbehälters mit einer einen Wirkstoff umfassenden Formulierung; mindestens einer Steuereinheit für eine Formulierungsströmungsrate; einer Verarbeitungseinheit; mindestens einer Mischereinheit; mindestens einer Sprüheinheit; wobei die mindestens eine Steuereinheit für die Formulierungsströmungsrate dazu ausgelegt ist, die Volumenströmung der Formulierung in die mindestens eine Mischereinheit zu regeln, wobei die mindestens eine Mischereinheit dazu ausgelegt ist, das Verdünnungsmittel aus dem mindestens einen Verdünnungsmittelbehälter mit der einen Wirkstoff umfassenden Formulierung aus dem mindestens einen Formulierungsbehälter zu mischen, um ein Gemisch zu erhalten, wobei die mindestens eine Sprüheinheit dazu ausgelegt ist, eine Pulsweitenmodulation zu implementieren, um das Gemisch zu versprühen;
b) Bestimmen (120) eines Sprühmusters für ein Gemisch, das ein Verdünnungsmittel und eine einen Wirkstoff umfassende Formulierung umfasst, für einen vordefinierten zu besprühenden Bereich, wobei die Sprühapplikationsvorrichtung dazu ausgelegt ist, eine konstante Konzentration des Wirkstoffs pro Hektar in Abhängigkeit von einem variablen Gemischsprühvolumen zu versprühen;
c) Bestimmen (130), durch die Verarbeitungseinheit, mindestens einer Anweisung zum Steuern der mindestens einen Steuereinheit für die Formulierungsrate und der mindestens einen Sprüheinheit, um das Sprühmuster auf den vordefinierten Bereich wie in Schritt b) bestimmt zu versprühen;
d) Versprühen (140) des Gemischs, das ein Verdünnungsmittel und eine einen Wirkstoff umfassende Formulierung umfasst, auf den vordefinierten Bereich.

11. Verfahren zur Sprühapplikation durch eine Sprühapplikationsvorrichtung nach Anspruch 10, wobei ein Fahrzeug die Sprühapplikationsvorrichtung und mindestens einen Aktuator zum Bewegen des Fahrzeugs relativ zum Boden umfasst.

12. Computerprogrammelement zum Steuern einer Sprühapplikationsvorrichtung nach einem der Ansprüche 1 bis 7 oder zum Steuern eines Fahrzeugs nach einem der Ansprüche 8 bis 9, wobei das Computerprogrammelement bei Ausführen durch einen Prozessor dazu ausgelegt ist, das Verfahren nach einem der Ansprüche 10 und 11 durchzuführen.

## Revendications

1. Dispositif d'application de pulvérisation (10), comprenant :
- au moins un réservoir de diluant (20) pour contenir un diluant ;
- au moins un réservoir de produit formulé (30) pour contenir un produit formulé comprenant un ingrédient actif ;
- au moins une unité de commande de débit d'écoulement de produit formulé (40) ;
- une unité de traitement (50) ;
- au moins une unité de mélangeage (60) ;
- au moins une unité de pulvérisation (70) ;
dans lequel l'au moins une unité de commande de débit d'écoulement de produit formulé est configurée pour réguler l'écoulement volumique du produit formulé dans l'au moins une unité de mélangeage, et
dans lequel l'au moins une unité de mélangeage est configurée pour mélanger le diluant provenant de l'au moins un réservoir de diluant avec le produit formulé comprenant un ingrédient actif provenant de l'au moins un réservoir de produit formulé pour obtenir un mélange, et
dans lequel l'au moins une unité de pulvérisation est configurée pour pulvériser le mélange,
dans lequel l'au moins une unité de pulvérisation est configurée pour mettre en œuvre une modulation d'impulsion en durée pour pulvériser le mélange, et
**caractérisé en ce que** le dispositif d'application de pulvérisation est configuré pour pulvériser une concentration constante de l'ingrédient actif par hectare en fonction d'un volume de pulvérisation de mélange variable comprenant une détermination, par l'unité de traitement, d'au moins une instruction de commander l'au moins une unité de commande de débit de produit formulé et l'au moins une unité de pulvérisation pour maintenir la dose de l'ingrédient actif constante par hectare tout en changeant le volume de mélange d'application par hectare.

2. Dispositif d'application de pulvérisation selon la revendication 1, dans lequel une instruction de commander l'au moins une unité de commande de débit de produit formulé par l'unité de traitement comprend une instruction de changer le débit d'écoulement du produit formulé depuis l'au moins un réservoir de produit formulé jusque dans l'au moins une unité de mélangeage.

3. Dispositif d'application de pulvérisation selon l'une quelconque des revendications précédentes, dans lequel la mise en œuvre de la modulation d'impulsion en durée comprend une instruction de changer le facteur d'utilisation de la modulation d'impulsion en durée.

4. Dispositif d'application de pulvérisation selon quelconques des revendications précédentes, dans lequel le dispositif d'application de pulvérisation comprend au moins un capteur (98) configuré pour mesurer la vitesse de mouvement du dispositif d'application de pulvérisation relativement au sol et dans lequel la détermination, par l'unité de traitement, est sur la base de la mesure de la vitesse de mouvement par l'au moins un capteur.

5. Dispositif d'application de pulvérisation selon quelconques des revendications précédentes, dans lequel l'unité de traitement est configurée pour déterminer une instruction de réduire le débit d'écoulement du produit formulé depuis l'au moins un réservoir de produit formulé dans l'au moins une unité de mélangeage en fonction d'une augmentation du facteur d'utilisation de la modulation d'impulsion en durée à condition que la vitesse de mouvement du dispositif d'application de pulvérisation relativement au sol soit constante et dans lequel l'unité de traitement est configuré pour déterminer une instruction d'augmenter le débit d'écoulement du produit formulé depuis l'au moins un réservoir de produit formulé dans l'au moins une unité de mélangeage en fonction d'une diminution du facteur d'utilisation de la modulation d'impulsion en durée à condition que la vitesse de mouvement du dispositif d'application de pulvérisation relativement au sol soit constante.

6. Dispositif d'application de pulvérisation selon l'une quelconque des revendications précédentes, dans lequel le dispositif d'application de pulvérisation comprend en outre une unité d'entrée (55), dans lequel l'unité d'entrée est configurée pour permettre à un utilisateur du dispositif d'application de pulvérisation de fournir des informations concernant une configuration de pulvérisation pour une zone prédéfinie et dans lequel la détermination, par l'unité de traitement, est sur la base des informations fournies par l'utilisateur.

7. Dispositif d'application de pulvérisation selon l'une quelconque des revendications précédentes, dans lequel le dispositif d'application de pulvérisation comprend en outre des moyens de détermination d'emplacement (97), dans lequel le dispositif d'application de pulvérisation est configuré pour pulvériser une concentration constante de l'ingrédient actif par hectare en fonction d'un volume de pulvérisation de mélange variable comprenant une détermination, par l'unité de traitement, d'au moins une instruction de commander l'au moins une unité de commande de débit de produit formulé et l'au moins une unité de pulvérisation, dans lequel la détermination, par l'unité de traitement, est sur la base de l'emplacement du dispositif d'application de pulvérisation tel que déterminé par les moyens de détermination d'emplacement (97).

8. Véhicule (400), comprenant un dispositif d'application de pulvérisation selon l'une quelconque des revendications précédentes et au moins un actionneur (410) pour mettre en mouvement le véhicule relativement au sol.

9. Véhicule selon la revendication 8, dans lequel le dispositif d'application de pulvérisation est configuré pour pulvériser une concentration constante de l'ingrédient actif par hectare en fonction d'un volume de pulvérisation de mélange variable comprenant une détermination, par l'unité de traitement, d'au moins une instruction de commander l'au moins une unité de commande de débit de produit formulé, l'au moins une unité de pulvérisation et la vitesse de mouvement du véhicule relativement au sol par l'intermédiaire de l'au moins un actionneur.

10. Procédé (100) d'application de pulvérisation par un dispositif d'application de pulvérisation, comprenant :
a) la mise en place (110) d'au moins un réservoir de diluant avec un diluant ; d'au moins un réservoir de produit formulé avec un produit formulé comprenant un ingrédient actif ; d'au moins une unité de commande de débit d'écoulement de produit formulé ; d'une unité de traitement ; d'au moins une unité de mélangeage ; d'au moins une unité de pulvérisation ; dans lequel l'au moins une unité de commande de débit d'écoulement de produit formulé est configurée pour réguler l'écoulement volumique du produit formulé dans l'au moins une unité de mélangeage, dans lequel, l'au moins une unité de mélangeage est configurée pour mélanger le diluant provenant de l'au moins un réservoir de diluant avec le produit formulé comprenant un ingrédient actif provenant de l'au moins un réservoir de produit formulé pour obtenir un mélange, dans lequel l'au moins une unité de pulvérisation est configurée pour pulvériser le mélange, et dans lequel l'au moins une unité de pulvérisation est configurée pour mettre en œuvre une modulation d'impulsion en durée pour pulvériser le mélange ;
b) la détermination (120) d'une configuration de pulvérisation pour un mélange comprenant un diluant et un produit formulé comprenant un ingrédient actif pour une zone prédéfinie destinée à recevoir une pulvérisation, dans lequel le dispositif d'application de pulvérisation est configuré pour pulvériser une concentration constante de l'ingrédient actif par hectare en fonction d'un volume de pulvérisation de mélange variable ;
c) la détermination (130), par l'unité de traitement, d'au moins une instruction de commander l'au moins une unité de commande de débit de produit formulé et l'au moins une unité de pulvérisation pour pulvériser la configuration de pulvérisation sur la zone prédéfinie telle que déterminée dans l'étape b) ;
d) la pulvérisation (140) du mélange comprenant un diluant et un produit formulé comprenant un ingrédient actif sur la zone prédéfinie.

11. Procédé d'application de pulvérisation par un dispositif d'application de pulvérisation selon la revendication 10, dans lequel un véhicule comprend le dispositif d'application de pulvérisation et au moins un actionneur pour mettre en mouvement le véhicule relativement au sol.

12. Élément de programme informatique pour commander un dispositif d'application de pulvérisation selon l'une quelconque des revendications 1 à 7, ou pour commander un véhicule selon l'une quelconque des revendications 8 et 9, dans lequel l'élément de programme informatique, lorsqu'il est exécuté par un processeur, est configuré pour réaliser le procédé de l'une quelconque des revendications 10 et 11.
